(19) Europäisches Patentamt

European Patent Office

Office européen des brevets

(11) **EP 1 217 620 A1**

(12) **DEMANDE DE BREVET EUROPEEN**

(43) Date de publication:
**26.06.2002 Bulletin 2002/26**

(51) Int Cl.⁷: **G11B 7/24**

(21) Numéro de dépôt: **01403285.8**

(22) Date de dépôt: **18.12.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **19.12.2000 FR 0016570**

(71) Demandeurs:
• **COMMISSARIAT A L'ENERGIE ATOMIQUE
75752 Paris Cédex 15 (FR)**
• **Moulage Plastique de l'Ouest
53700 Averton (FR)**

(72) Inventeurs:
• **Bechevet, Bernard
38640 Claix (FR)**
• **Paviet, Romuald
73210 Aime (FR)**
• **Perrier, Robin
38000 Grenoble (FR)**
• **Bruneau, Jean-Michel
38470 Teche (FR)**

(74) Mandataire: **Audier, Philippe André
Brevatome,
3, rue du Docteur Lancereaux
75008 Paris (FR)**

(54) **Support d'enregistrement optique à plusieurs niveaux de lecture/écriture par faisceau laser**

(57) L'invention concerne un support d'enregistrement optique à plusieurs niveaux de lecture/écriture par faisceau laser, comprenant un premier niveau semi-transparent et au moins un deuxième niveau, le premier niveau étant le niveau situé le plus près de la source émettrice du faisceau laser, chaque niveau comprenant une couche de matériau à changement de phase à deux états stables réversibles sous l'effet du faisceau laser. Le matériau à changement de phase du premier niveau est un alliage de formule :

$$[(Ge_yTe_{1-y})_a (Sb_zTe_{1-z})_{1-a}]_{1-b} (In_{1-x}Te_x)_b$$

avec :

$$0,4 \leq y \leq 0,6$$

$$0,3 \leq z \leq 0,5$$

$$0,4 \leq x \leq 0,6$$

$$0,3 \leq a \leq 0,5$$

$$0,01 \leq b \leq 0,3$$

le premier niveau ayant une réflectivité comprise entre 10 et 30%, une transmission au moins égale à 45% une puissance d'écriture inférieure à 23 mW et une puissance d'effacement inférieure à 10 mW.

EP 1 217 620 A1

**Description**

**Domaine technique**

L'invention concerne un support d'enregistrement optique à plusieurs niveaux de lecture/écriture par faisceau laser. Elle concerne plus précisément l'utilisation d'un alliage composé de germanium, d'indium, d'antimoine et de tellure comme matériau de couche active pour un disque optique réinscriptible.

**Etat de la technique antérieure**

On connaît essentiellement deux types de disques optiques réinscriptibles. Un premier type utilise le changement de phase d'un matériau solide : phase cristalline-phase amorphe. Un deuxième type utilise les propriétés magnéto-optiques de certains matériaux, notamment la rotation de polarisation d'un faisceau lumineux par effet Kerr. La présente invention concerne les supports d'enregistrement optique utilisant le changement de phase du matériau d'enregistrement.

Les disques optiques à changement de phase font l'objet d'intenses recherches depuis de nombreuses années. Ces disques fonctionnent sur le principe selon lequel il est possible de faire passer, de façon réversible, un matériau d'un état amorphe à un état cristallin en fonction de l'intensité et de la durée d'un faisceau laser qui lui est appliqué. Ce principe permet en outre une sur-écriture directe de nouvelles informations sur des informations déjà écrites. La couche active (c'est-à-dire la couche d'enregistrement) d'un disque à changement de phase contenant des informations présente des zones amorphes réparties dans une matrice cristalline, ces zones amorphes représentant l'information binaire enregistrée. La lecture de ces informations se fait par voie optique, au moyen d'un faisceau laser de lecture en général guidé par un sillon. Le faisceau de lecture balaie la surface du disque en étant focalisé sur la couche active. Il en résulte un faisceau réfléchi qui est dirigé sur un système de détection. Comme la réflectivité des zones amorphes est généralement inférieure à celle de la matrice cristalline, il est possible de déterminer si une zone atteinte par le faisceau de lecture est amorphe ou cristalline et de retrouver ainsi l'information binaire correspondant à cette zone.

Les matériaux à changement de phase généralement utilisés dans cette application sont des chalcogénures de type GeSbTe, AgInSbTe ou encore InSbTe. Des séléniures et des oxydes de tellure peuvent aussi être utilisés. Les propriétés requises pour ces matériaux sont :

- la réversibilité des deux états physiques (amorphe et cristallin),
- la stabilité de ces deux états au voisinage de la température ambiante (de -40°C à +80°C environ),
- un temps d'amorphisation suffisamment faible (de l'ordre de quelques dizaines de nanosecondes),
- un temps de cristallisation suffisamment faible (de l'ordre de quelques dizaines de nanosecondes),
- un vieillissement satisfaisant et une aptitude à subir des cycles (ou cyclabilité),
- une température de fusion pas trop élevée (environ 600°C).

Ces matériaux doivent être utilisés dans des conditions différentes suivant le type de disque. Par exemple, un disque du type CD-RW est utilisé pour une vitesse linéaire de déplacement de 1,2 m/s alors qu'un disque du type DVD-RAM est utilisé pour une vitesse linéaire de 6 m/s. Il est alors rare qu'un même matériau puisse satisfaire simultanément à tous ces critères, d'autant plus qu'ils ne sont pas indépendants. Ainsi le temps minimum de cristallisation impose souvent une composition particulière.

Lors de l'écriture, le matériau à changement de phase est amené à la fusion puis subit une trempe sévère (vitesse de refroidissement de l'ordre de la dizaine de °C par nanoseconde). Pour pouvoir fonctionner correctement, la couche active est encapsulée entre deux couches de matériau diélectrique ne réagissant pas avec le matériau à changement de phase.

La partie active d'un support d'enregistrement de ce type comprend un empilement constitué en général d'un substrat transparent, d'une première couche diélectrique inerte vis-à-vis du matériau à changement de phase, d'une couche de ce matériau à changement de phase, d'une seconde couche diélectrique jouant le même rôle que la première couche diélectrique et enfin d'une couche réflectrice pour le faisceau de lecture, cette couche réflectrice servant également de puits thermique. A toutes ces couches s'ajoutent des couches intermédiaires qui peuvent servir de barrière de diffusion. Cette disposition est utilisée industriellement pour produire des disques CD-RW, DVD-RAM, DVD-RW et DVD+RW.

Des développements récents ont permis de réaliser des disques optiques à deux niveaux d'enregistrement comprenant deux empilements tels que celui détaillé ci-dessus. Ces empilements assurent les mêmes fonctions mais l'un est semi-transparent. Ainsi, il est possible d'écrire et de lire à travers de l'empilement semi-transparent.

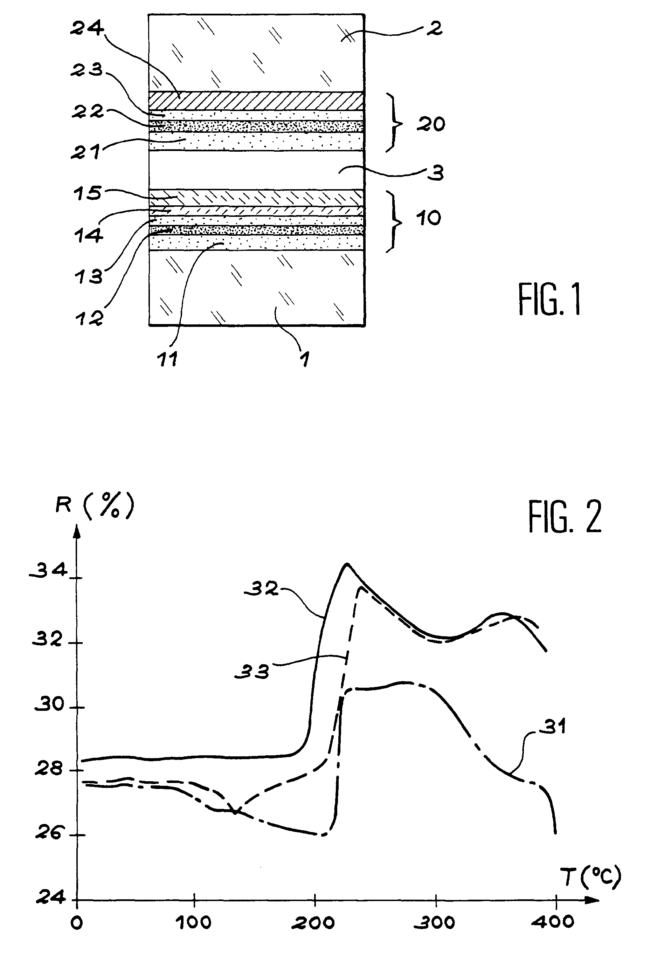

La figure 1 est un schéma en coupe transversale d'un support d'enregistrement optique à deux niveaux de lecture/écriture par faisceau laser selon l'art connu. Ce support d'enregistrement est du type décrit dans le document EP-A-0 810 590. Le support d'enregistrement comprend un premier niveau 10 et un deuxième niveau 20 séparés par un espaceur 3, l'ensemble étant maintenu entre un premier substrat transparent 1 et un deuxième substrat 2. Le support d'enregistrement représenté est destiné à être lu et inscrit au travers du substrat transparent 1.

Le premier niveau d'enregistrement 1 situé le plus proche de la source émettrice d'un rayon laser de lecture ou d'écriture, comprend, en superposition sur le substrat transparent 1, une couche diélectrique 11, une couche de matériau à changement de phase 12, une couche d'interférence optique 13, une couche semi-transparente de dissipation de chaleur 14 et une autre couche d'interférence optique 15.

Le deuxième niveau d'enregistrement 2, situé le plus éloigné de la source émettrice d'un rayon laser de lecture ou d'écriture, comprend, en superposition sur l'espaceur 3, une couche diélectrique 21, une couche de matériau à changement de phase 22, une autre couche diélectrique 23 et une couche réflectrice 24 servant aussi de couche de dissipation de chaleur.

Dans un disque optique à deux niveaux, le deuxième niveau (celui qui est le plus éloigné de la source laser) est lu au travers du premier niveau (celui qui est le plus proche de la source laser). Un niveau d'enregistrement à changement de phase comporte au minimum une couche active absorbante. Le taux d'absorption d'une couche mince absorbante est souvent quantifié au travers du coefficient d'absorption optique k. L'indice de cette couche s'écrit sous la forme complexe $N = n - jk$, n étant l'indice de réfraction de la couche. En première approximation, l'énergie absorbée par la couche de matériau à changement de phase est proportionnelle à $\exp(-ke)$ où e est l'épaisseur de la couche. Pour favoriser la transmission au travers du premier niveau, il faut donc limiter le coefficient k du matériau actif utilisé par le premier niveau.

Le problème qui se pose est donc de trouver un matériau à changement de phase permettant une transmission favorable du faisceau laser destiné à une couche d'un matériau à changement de phase d'un autre niveau.

Le document EP-A-0 810 590, cité plus haut, divulgue un support d'enregistrement optique à deux niveaux. Le matériau à changement de phase du premier niveau est un alliage de composition $Ge_xTe_ySb_z$ avec $10<x<15$, $45<y<55$, $38<z<48$ et $x+y+z=100\%$.

Le document US-A-5 254 382 divulgue un milieu d'enregistrement optique comportant une couche de matériau à changement de phase constitué d'un alliage de germanium, d'indium, d'antimoine et de tellure. Cet alliage est choisi afin d'améliorer les propriétés de durabilité et de vitesse d'écriture pour un milieu d'enregistrement optique à un seul niveau. Ce document ne fait pas référence aux propriétés de transparence de la couche de matériau à changement de phase et à la possibilité d'une utilisation dans un premier niveau d'un support d'enregistrement optique à plusieurs niveaux.

Le document JP-A-11-126 366 divulgue un milieu d'enregistrement optique à changement de phase dont le matériau choisi pour la couche d'enregistrement permet de remédier à des problèmes d'instabilité ("jitter" en anglais) de signal. Ce matériau est un alliage de type GeInSbTe.

**Exposé de l'invention**

La présente invention apporte une solution au problème posé, à savoir l'utilisation d'un matériau à changement de phase permettant une transmission favorable du faisceau laser destiné à une couche d'un matériau à changement de phase d'un autre niveau.

L'invention a donc pour objet un support d'enregistrement optique à plusieurs niveaux de lecture/écriture par faisceau laser, comprenant un premier niveau semi-transparent et au moins un deuxième niveau, le premier niveau étant le niveau situé le plus près de la source émettrice du faisceau laser, chaque niveau comprenant une couche de matériau à changement de phase à deux états stables réversibles sous l'effet du faisceau laser, caractérisé en ce que le matériau à changement de phase du premier niveau est un alliage de formule :

$$[(Ge_yTe_{1-y})_a\,(Sb_zTe_{1-z})_{1-a}]_{1-b}\,(In_{1-x}Te_x)_b$$

avec :

$0,4 \leq y \leq 0,6$
$0,3 \leq z \leq 0,5$
$0,4 \leq x \leq 0,6$
$0,3 \leq a \leq 0,5$
$0,01 \leq b \leq 0,3$

le premier niveau ayant une réflectivité comprise entre 10 et 30%, une transmission au moins égale à 45% et une puissance d'écriture inférieure à 23 mW et une puissance d'effacement inférieure à 10 mW.

Avantageusement, la couche de matériau à changement de phase du premier niveau est comprise entre deux couches de confinement. De préférence, les deux couches de confinement sont en un matériau choisi parmi ZnS-SiO$_2$, SiO$_2$, Si$_3$N$_4$ et GeN. Avantageusement, la couche de matériau à changement de phase a une épaisseur d'au moins 6 nm et les couches de confinement ont environ 80 nm d'épaisseur.

**Brève description des dessins**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1, déjà décrite, est un schéma en coupe transversale d'un support d'enregistrement optique à deux niveaux de lecture/écriture par faisceau laser selon l'art connu,
- la figure 2 est un diagramme représentant l'évolution de la réflectivité en fonction de la température de différentes compositions d'un matériau à changement de phase destiné au premier niveau d'enregistrement d'un support d'enregistrement optique à plusieurs niveaux, conf ormément à l'invention,
- la figure 3 représente la structure des disques utilisés pour les tests statiques d'un niveau d'enregistrement comprenant un matériau à changement de phase destiné au premier niveau d'enregistrement d'un support d'enregistrement optique à plusieurs niveaux, conformément à l'invention,
- la figure 4 est un diagramme représentant l'évolution du contraste en fonction du temps d'impulsion d'écriture de différentes compositions d'un matériau à changement de phase destiné au premier niveau d'enregistrement d'un support d'enregistrement optique à plusieurs niveaux, conformément à l'invention,
- la figure 5 est un diagramme représentant l'évolution du contraste en fonction du temps d'impulsion d'effacement de différentes compositions d'un matériau à changement de phase destiné au premier niveau d'enregistrement d'un support d'enregistrement optique à plusieurs niveaux, conformément à l'invention,
- la figure 6 est un diagramme représentant l'évolution du rapport signal/bruit en fonction de la puissance d'écriture pour un premier niveau d'enregistrement d'un support d'enregistrement optique à plusieurs niveaux, conformément à l'invention,
- la figure 7 représente une structure de premier niveau d'enregistrement d'un support d'enregistrement optique à plusieurs niveaux, conformément à l'invention,
- les figures 8, 9 et 10 donnent des valeurs respectivement de la réflectivité, de la transmission et de l'absorption en fonction de l'épaisseur des couches de diélectrique de confinement d'une couche d'un matériau à changement de phase destiné au premier niveau d'enregistrement d'un support d'enregistrement optique à plusieurs niveaux, conformément à l'invention.

**Description détaillée de modes de réalisation de l'invention**

Le matériau à changement de phase destiné au premier niveau d'enregistrement d'un support d'enregistrement optique à plusieurs niveaux, selon l'invention, est un alliage de formule :

$$[(Ge_yTe_{1-y})_a \, (Sb_zTe_{1-z})_{1-a}]_{1-b} \, (In_{1-x}Te_x)_b$$

avec :

$0,4 \le y \le 0,6$
$0,3 \le z \le 0,5$
$0,4 \le x \le 0,6$
$0,3 \le a \le 0,5$
$0,01 \le b \le 0,3$

Cet alliage présente un coefficient d'extinction inférieur aux alliages habituellement utilisés pour ce type de support d'enregistrement. Utilisé dans le premier niveau d'un disque à deux niveaux d'enregistrement, il permet ainsi une écriture facilitée sur le deuxième niveau.

A titre de comparaison, le tableau I donne les indices optiques n et k à 650 nm, pour les phases amorphe et cristalline, pour différentes compositions GeInSbTe selon l'invention et le tableau II donne les mêmes indices pour différentes compositions de l'art connu.

Tableau I

| Compositions | Ge$_{23}$In$_4$Sb$_{21}$Te$_{52}$ | Ge$_{22}$In$_9$Sb$_{18}$Te$_{51}$ | Ge$_{22}$In$_{14}$Sb$_{16}$Te$_{48}$ |
|---|---|---|---|
| n amorphe | 3,65 | 3,62 | 3,6 |
| k amorphe | 1,34 | 1,2 | 1,15 |
| | | | |
| n cristallin | 3,71 | 3,06 | 2,88 |
| k cristallin | 2,38 | 2,67 | 2,12 |

Tableau II

| Compositions | Ge$_{23}$Sb$_{22}$Te$_{55}$ | Ag$_{12}$In$_7$Sb$_{55}$Te$_{26}$ | In$_{50}$Sb$_{17}$Te$_{33}$ |
|---|---|---|---|
| n amorphe | 3,7 | 3,9 | 3,4 |
| k amorphe | 1,6 | 2,3 | 1,4 |
| | | | |
| n cristallin | 3,9 | 3,5 | 3,6 |
| k cristallin | 4,1 | 3,4 | 0,9 |

Le diagramme de la figure 2 représente l'évolution de la réflectivité R en fonction de la température pour différentes compositions de matériau à changement de phase du tableau I. Les courbes du diagramme de la figure 2 ont été relevées pour des couches minces de matériau d'une épaisseur de 200 nm déposées sur un substrat de silicium. La courbe 31 correspond à la composition Ge$_{23}$In$_4$Sb$_{21}$Te$_{52}$. La courbe 32 correspond à la composition Ge$_{22}$In$_9$Sb$_{18}$Te$_{51}$. La courbe 33 correspond à la composition Ge$_{22}$In$_{14}$Sb$_{16}$Te$_{48}$.

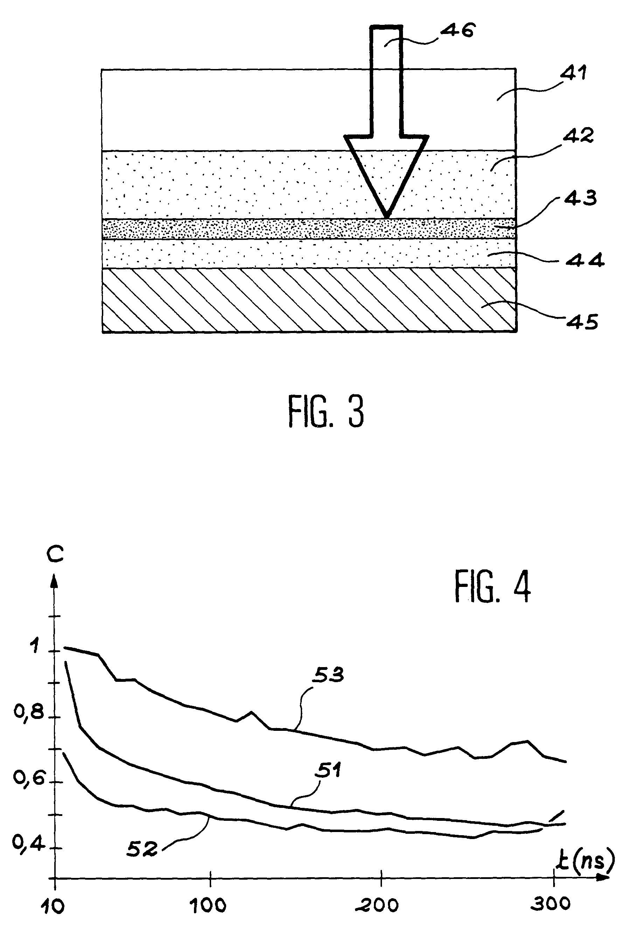

La figure 3 représente, en coupe transversale, une structure de disque utilisée pour des tests statiques d'un niveau d'enregistrement selon l'invention. La structure comprend un substrat de verre 41 sur lequel on a successivement déposé : une couche 42 de diélectrique ZnS - SiO$_2$ de 100 nm d'épaisseur, une couche 43 de matériau à changement de phase de 20 nm d'épaisseur, une couche 44 de diélectrique ZnS - SiO$_2$ de 30 nm d'épaisseur et une couche 45 d'aluminium de 80 nm d'épaisseur formant réflecteur. La flèche 46 symbolise un faisceau laser focalisé sur la couche 43 et utilisé pour réaliser les tests décrits ci-dessous.

Le diagramme de la figure 4 représente l'évolution du contraste C (quotient de la réflectivité R sur la réflectivité cristalline Rc) en fonction du temps d'impulsion d'écriture. La puissance d'écriture était de 15 mW. La courbe 51 correspond à la composition Ge$_{23}$In$_4$Sb$_{21}$Te$_{52}$. La courbe 52 correspond à la composition Ge$_{22}$In$_9$Sb$_{18}$Te$_{51}$. La courbe 53 correspond à la composition Ge$_{22}$In$_{14}$Sb$_{16}$Te$_{48}$.

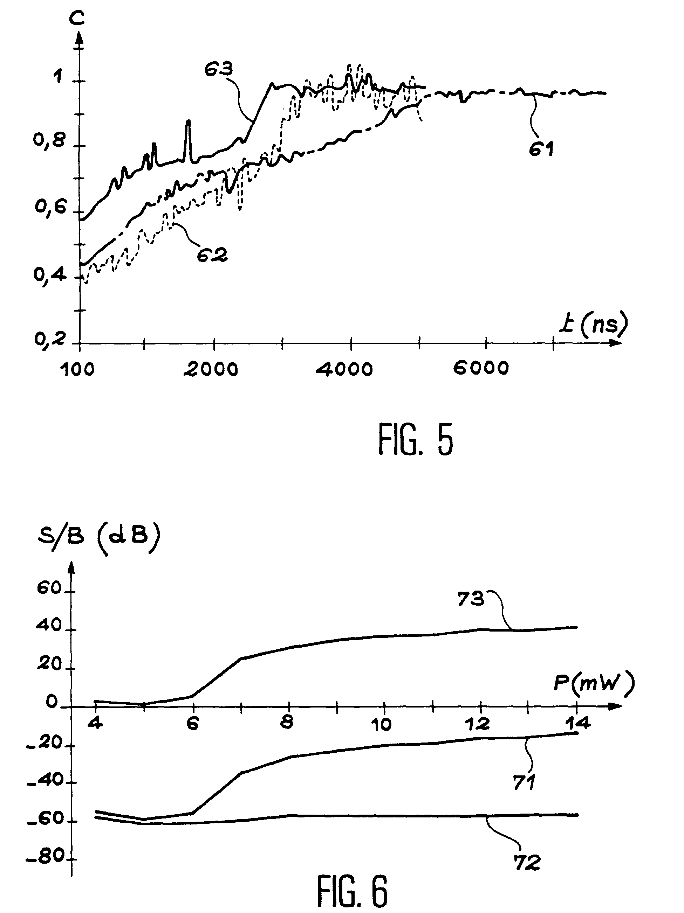

Le diagramme de la figure 5 représente l'évolution du contraste C en fonction du temps d'impulsion d'effacement. Les paramètres d'écriture étaient de 15 mW pour 200 ns. La courbe 61 correspond à la composition Ge$_{23}$In$_4$Sb$_{21}$Te$_{52}$. La courbe 62 correspond à la composition Ge$_{22}$In$_9$Sb$_{18}$Te$_{51}$. La courbe 63 correspond à la composition Ge$_{22}$In$_{14}$Sb$_{16}$Te$_{48}$.

Le diagramme de la figure 6 représente l'évolution du rapport signal/bruit S/B en fonction de la puissance d'écriture. La courbe 71 correspond au signal, la courbe 72 au bruit et la courbe 73 au rapport signal/bruit.

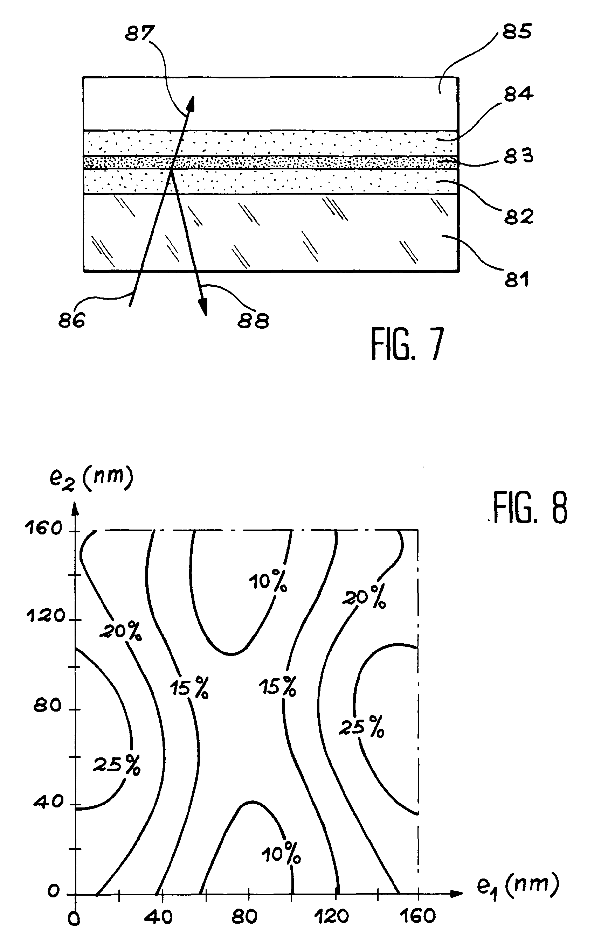

La figure 7 représente, vue en coupe, une structure de premier niveau d'enregistrement constituée sur un substrat transparent 81. Le substrat 81 supporte successivement une couche diélectrique 82 d'épaisseur e$_1$, une couche 83 de matériau à changement de phase conformément à l'invention, une couche diélectrique 84 d'épaisseur e$_2$ et une couche 85 faisant office d'espaceur. La couche 83 de matériau à changement de phase a 20 nm d'épaisseur. Un faisceau laser 86 est focalisé sur la couche 83 de matériau à changement de phase. Il en résulte un faisceau transmis 87 et un faisceau réfléchi 88.

Des mesures de réflectivité, de transmission et d'absorption ont été effectuées sur cette structure en fonction des épaisseurs des couches diélectriques 82 et 83. Les résultats de ces mesures ont permis d'établir les représentations des figures 8, 9 et 10.

La figure 8 représente la réflectivité de la structure en fonction des épaisseurs e$_1$ et e$_2$. Des lignes d'égales réflectivités ont été tracées pour 10%, 15%, 20% et 25% de réflectivité.

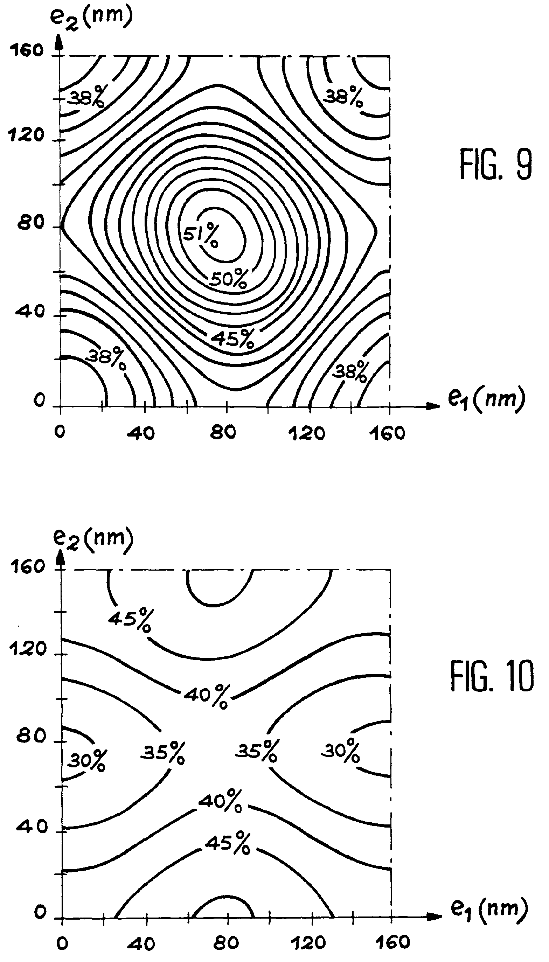

La figure 9 représente la transmission de la structure en fonction des épaisseurs e$_1$ et e$_2$. Des lignes d'égales transmissions ont été tracées depuis 38% jusqu'à 51% par variation d'une unité.

La figure 10 représente l'absorption de la structure en fonction des épaisseurs $e_1$ et $e_2$. Des lignes d'égales absorptions ont été tracées pour 30%, 35%, 40% et 45% d'absorption.

Ces représentations montrent que des épaisseurs $e_1$ et $e_2$ voisines de $\lambda/4n$ permettent d'optimiser la transmission, ce qui favorise l'écriture et l'effacement du deuxième niveau.

Dans le cas décrit ci-dessus, il est avantageux de choisir les épaisseurs $e_1$ et $e_2$ égales à 80 nm.

Les paramètres des dépôts utilisés pour réaliser les structures décrites ci-dessus par copulvérisation, avec une couche à changement de phase de composition $Ge_{22}In_9Sb_{13}Te_{51}$, sont les suivants :

- vide limite de l'enceinte de la machine de dépôt : $2.10^{-4}$ mbar,
- débit d'argon lors du dépôt de la couche d'aluminium : 40 $cm^3$ normaux/minute,
- pression lors du dépôt de la couche d'aluminium : $3.10^{-3}$ mbar,
- débit d'argon lors du dépôt des couches de ZnS - $SiO_2$ : 40 $cm^3$ normaux/minute,
- pression lors du dépôt des couches de ZnS - $SiO_2$ : $6.10^{-3}$ mbar,
- débit d'argon lors du dépôt de la couche de matériau à changement de phase : 40 $cm^3$ normaux/minute,
- pression lors du dépôt de la couche de matériau à changement de phase $4.10^{-3}$ mbar,
- puissance appliquée à la cible de GeTe correspondant à 100 mA,
- puissance appliquée à la cible de InTe correspondant à 100 mA,
- puissance appliquée à la cible de SbTe correspondant à 50 mA.

Les paramètres utilisés à l'initialisation des disques sont les suivants :

- distance sur vernier : 11,64 mm,
- intensité laser : 700 mA,
- taille du spot : 30 $\mu$m,
- recouvrement : 10 $\mu$m,
- vitesse linéaire : 3 m/s.

L'invention peut être appliquée dans le domaine de l'enregistrement sur disque optique, par exemple pour DVD-RAM, DVD-RW, DVD+RW ou CD-RW double niveau. L'alliage divulgué permet aussi de réaliser des disques optiques enregistrables sur un nombre de niveaux supérieur à 2.

**Revendications**

1. Support d'enregistrement optique à plusieurs niveaux de lecture/écriture par faisceau laser, comprenant un premier niveau semi-transparent et au moins un deuxième niveau, le premier niveau étant le niveau situé le plus près de la source émettrice du faisceau laser, chaque niveau comprenant une couche de matériau à changement de phase à deux états stables réversibles sous l'effet du faisceau laser, **caractérisé en ce que** le matériau à changement de phase du premier niveau est un alliage de formule :

$$[(Ge_yTe_{1-y})_a\ (Sb_zTe_{1-z})_{1-a}]_{1-b}\ (In_{1-x}Te_x)_b$$

avec :

$$0,4 \le y \le 0,6$$
$$0,3 \le z \le 0,5$$
$$0,4 \le x \le 0,6$$
$$0,3 \le a \le 0,5$$
$$0,01 \le b \le 0,3$$

le premier niveau ayant une réflectivité comprise entre 10 et 30%, une transmission au moins égale à 45% et une puissance d'écriture inférieure à 23 mW et une puissance d'effacement inférieure à 10 mW.

2. Support d'enregistrement optique selon la revendication 1, **caractérisé en ce que** la couche de matériau à changement de phase du premier niveau est comprise entre deux couches de confinement.

3. Support d'enregistrement optique selon la revendication 2, **caractérisé en ce que** les deux couches de confinement sont en un matériau choisi parmi ZnS-SiO$_2$, SiO$_2$, Si$_3$N$_4$ et GeN.

4. Support d'enregistrement optique selon l'une des revendications 2 ou 3, **caractérisé en ce que** la couche de matériau à changement de phase a une épaisseur d'au moins 6 nm et les couches de confinement ont environ 80 nm d'épaisseur.

FIG.1

FIG. 2

FIG. 3

FIG. 4

FIG. 5

FIG. 6

FIG. 7

FIG. 8

FIG. 9

FIG. 10

## RAPPORT DE RECHERCHE EUROPEENNE

**Office européen des brevets**

Numéro de la demande

EP 01 40 3285

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 254 382 A (UENO OSAMU ET AL) 19 octobre 1993 (1993-10-19) * le document en entier * | 1-4 | G11B7/24 |
| A | EP 0 957 477 A (MATSUSHITA ELECTRIC IND CO LTD) 17 novembre 1999 (1999-11-17) * le document en entier * | 1-4 | |
| A | PATENT ABSTRACTS OF JAPAN vol. 1999, no. 10, 31 août 1999 (1999-08-31) & JP 11 126366 A (ASAHI CHEM IND CO LTD), 11 mai 1999 (1999-05-11) * abrégé * | 1-4 | |
| A | EP 0 294 932 A (ASAHI CHEMICAL IND) 14 décembre 1988 (1988-12-14) * exemple 3 * | 1 | |

DOMAINES TECHNIQUES RECHERCHES (Int.Cl.7)

G11B

Le présent rapport a été établi pour toutes les revendications

| Lieu de la recherche | Date d'achèvement de la recherche | Examinateur |
|---|---|---|
| LA HAYE | 11 avril 2002 | Annibal, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.                    EP 01 40 3285

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2002

| Document brevet cité au rapport de recherche | | Date de publication | Membre(s) de la famille de brevet(s) | | Date de publication |
|---|---|---|---|---|---|
| US 5254382 | A | 19-10-1993 | JP | 5016528 A | 26-01-1993 |
| EP 0957477 | A | 17-11-1999 | CN | 1236156 A | 24-11-1999 |
| | | | EP | 0957477 A2 | 17-11-1999 |
| | | | JP | 3250989 B2 | 28-01-2002 |
| | | | JP | 2000036130 A | 02-02-2000 |
| | | | JP | 2001273674 A | 05-10-2001 |
| | | | TW | 448435 B | 01-08-2001 |
| JP 11126366 | A | 11-05-1999 | AUCUN | | |
| EP 0294932 | A | 14-12-1988 | JP | 2537875 B2 | 25-09-1996 |
| | | | JP | 63308739 A | 16-12-1988 |
| | | | JP | 1014083 A | 18-01-1989 |
| | | | JP | 2726259 B2 | 11-03-1998 |
| | | | JP | 1171133 A | 06-07-1989 |
| | | | AU | 596011 B2 | 12-04-1990 |
| | | | AU | 1754188 A | 15-12-1988 |
| | | | DE | 3885156 D1 | 02-12-1993 |
| | | | DE | 3885156 T2 | 17-03-1994 |
| | | | EP | 0294932 A2 | 14-12-1988 |
| | | | KR | 9202931 B1 | 10-04-1992 |
| | | | SG | 132693 G | 31-03-1994 |
| | | | US | 5221588 A | 22-06-1993 |

EPO FORM P0460

Pour tout renseignement concernant cette annexe : voir Journal Officiel de l'Office européen des brevets, No.12/82